# EUROPEAN PATENT APPLICATION

(11) **EP 4 579 288 A1**
(43) Date of publication of application: **02.07.2025**
(21) Application number: 24216717.9
(22) Date of filing: 02.12.2024
(51) Int. Cl.: G02B 5/124, G02B 30/56

(54) **DISPLAY DEVICE**

(30) Priority: 26.12.2023 JP 2023219163
(71) Applicant: Alps Alpine Co., Ltd., Ota-ku, Tokyo 145-8501 (JP)
(72) Inventor: Uchida, Keitaro, Osaki-city, Miyagi (JP)
(74) Representative: Schmitt-Nilson Schraud Waibel Wohlfrom Patentanwälte Partnerschaft mbB

(57) **Abstract**

A display device capable of displaying an aerial image by using retroreflection is provided. The display device includes: a generator configured to generate light representing a design of the aerial image as an original image; a retroreflective member configured to retroreflect the light representing the design; and a beam splitter including a curved surface, wherein the beam splitter is disposed such that a concave side thereof faces the retroreflective member.

## Description

The present disclosure relates to a display device having a function of displaying an aerial image by using retroreflection.

Aerial imaging by retro-reflection (AIRR) is known. For example, JP 2022-150245 A discloses a display device in which a light source and a retroreflective member are positioned such that light specularly reflected by the retroreflective member does not enter a user's observation range, thereby improving contrast and visibility of the aerial image. JP 6927554 B discloses a display device in which the retroreflective member is arranged at a position different from a light-emitting direction of light emitted from the light source, thereby enabling observation of the aerial image from a wide angle.

The present disclosure relates to a display device according to the appended claims. Embodiments are disclosed in the dependent claims. According to an aspect, a display device configured to display an aerial image by using retroreflection includes a generator for generating light representing a design as an original image of the aerial image, a retroreflective member for retroreflecting the light representing the design, and a beam splitter having a curved surface. The beam splitter is disposed such that a concave side thereof faces the retroreflective member.

In an embodiment, the retroreflective member includes an opening for generating the design, the generator includes a light source for irradiating the retroreflective member, and light representing the design is generated by irradiating the retroreflective member with the light from the light source. In an embodiment, the generator further includes a diffuser plate and a polarizing plate between the light source and the retroreflective member. The light representing the design is polarized light. The beam splitter is a polarized-beam splitter. In an embodiment, the beam splitter is arranged such that an incident angle is greater than (>) a reflection angle when the light representing the design is made incident thereon. In an embodiment, the retroreflective member is arranged such that its principal surface is orthogonal to an axis passing through the center of curvature of the beam splitter. In an embodiment, the retroreflective member is arranged such that its principal surface is oblique to the axis passing through the center of curvature of the beam splitter. In an embodiment, the generator includes a display light source for emitting light of a video image as the design. In an embodiment, the display light source is arranged such that its optical axis is oblique to an axis passing through the center of curvature of the beam splitter.
FIG. 1A is a perspective view of an existing display device;
FIG. 1B is a schematic cross-sectional view of the existing display device;
FIG. 2A is a schematic cross-sectional view illustrating a configuration of a display device according to a first embodiment of the present disclosure;
FIG. 2B is a diagram illustrating optical paths when an aerial image is formed in the display device according to the first embodiment of the present disclosure;
FIG. 3 is a diagram for comparing an aerial image generated by the display device according to the present embodiment with an aerial image generated by an existing display device;
FIG. 4 is an enlarged view of one side on the basis of an optical axis of the display device according to the present embodiment, and is a diagram illustrating how visibility of a higher-order aerial image is reduced;
FIG. 5A is a schematic cross-sectional view illustrating a configuration of a display device according to a second embodiment of the present disclosure;
FIG. 5B is a schematic cross-sectional view illustrating a configuration of a display device according to a third embodiment of the present disclosure;
FIG. 6A is a schematic diagram illustrating a positional relationship of optical members of the display device; and
FIG. 6B is a diagram illustrating optical simulation results of aerial image formation.

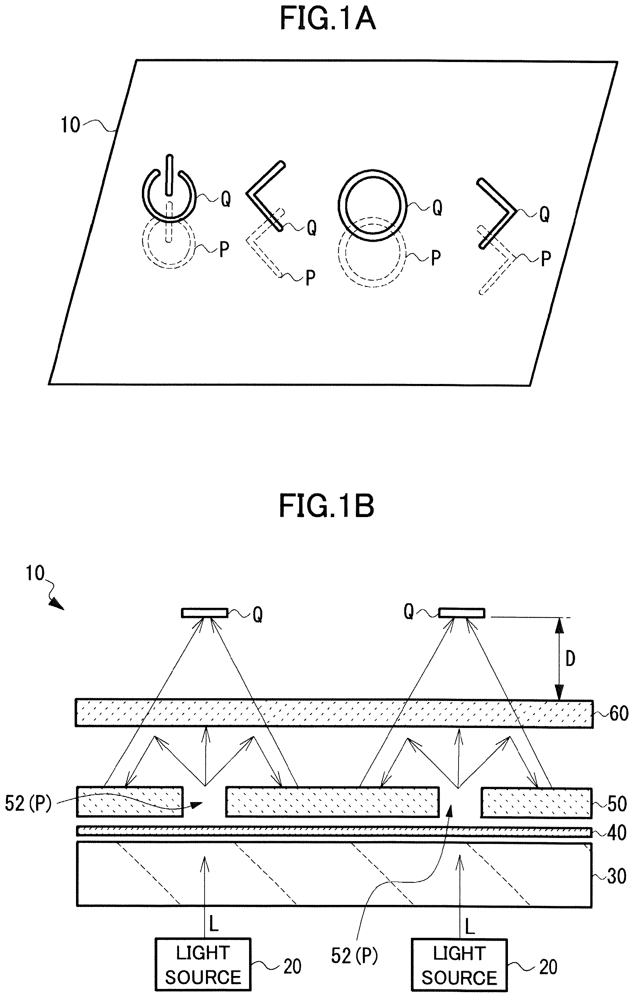

FIG. 1A is a perspective view of a display device targeted for thinning that uses the AIRR, and FIG. 1B is a schematic cross-sectional view of the display device. As illustrated in FIG. 1A, a display device 10 displays an aerial image Q at a position at a height D (also referred to as "distance D") from a surface of a housing or the like, and a user can visually recognize the aerial image Q at a height D.

As illustrated in FIG. 1B, the display device 10 includes a light source 20, a diffusing layer 30, a polarizing plate 40, a retroreflective plate 50, and a polarized-beam splitter 60. Thinning of the display device is achieved by arranging the polarized-beam splitter 60 so as to parallelly face the retroreflective plate 50. A phase-adjusting film such as a λ/4 film is formed on a surface of the retroreflective plate 50. Also, a design P including an opening (through hole) 52 for generating an aerial image Q is formed on the surface of the retroreflective plate 50. The design P including the opening 52 is an original image of the aerial image Q representing an icon for user operation as illustrated in FIG. 1A.

After being diffused by the diffusing layer 30, light L emitted from the light source 20 becomes polarized light through the polarizing plate 40, and irradiates an underside of the retroreflective plate 50. The light irradiated on the underside of the retroreflective plate 50 passes through the opening 52 and is reflected by the polarized-beam splitter 60. The reflected light is reflected by the retroreflective plate 50 in the same direction as the direction of incident light. The light retroreflected by the retroreflective plate 50 passes through the polarized-beam splitter 60 and thus the aerial image Q of the design P is formed.

However, such a display device has the following issues. As illustrated in FIG. 1B, the aerial image Q and the design P that is formed on the retroreflective plate 50 are geometrically symmetric about the polarized-beam splitter 60. That is, the height D at which the aerial image Q is formed is equal to a distance between the retroreflective plate 50 generating the design P and the polarized-beam splitter 60.

For commercialization of the display device, thinning of the display device is desired. However, when the display device is made thin, there is an issue that the height D at which the aerial image Q is formed is also reduced. Furthermore, the light reflected by the retroreflective plate 50 includes not only a retroreflective light component but also includes some light components that are specularly reflected. This also occurs when a phase-adjusting film or the like is formed on the retroreflective plate.

Such specularly-reflected components multiply reflect between the retroreflective plate 50 and the polarized-beam splitter 60, and form a higher-order virtual image at a position different from that of an originally intended aerial image. However, generation of such higher-order aerial image is basically undesirable in any cases.

It is an object of the present disclosure to solve the foregoing issue and to provide a display device that is thin in its structure while maintaining the height at which an aerial image forms an image.

A display device according to the present disclosure displays an aerial video image or an aerial image by using retroreflection in a three-dimensional space, which can be viewed without wearing special glasses or the like. In some embodiments, the display device according to the present disclosure is applied to a user input interface that uses an aerial image. It should be noted that drawings referred to in the following embodiments include exaggerated representations to facilitate understanding of the present disclosure, and do not represent the shape or scale of an actual product as it is.

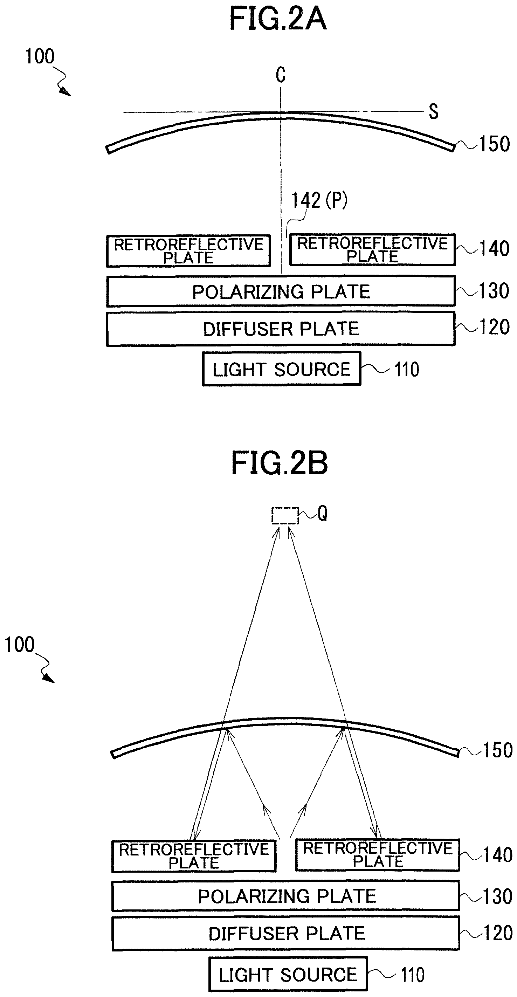

Next, an embodiment of the present disclosure will be described in detail. FIG. 2A is a schematic cross-sectional view illustrating the configuration of a display device according to the first embodiment of the present disclosure, and FIG. 2B is a diagram illustrating an optical path when an aerial image is formed in the display device according to the present embodiment.

As illustrated in FIG. 2A, a display device 100 of the present embodiment includes a light source 110, a diffuser plate 120, a polarizing plate 130, a retroreflective plate 140, and a polarized-beam splitter 150. Although not illustrated in FIG. 2A, these members can be attached to, for example, a housing or the like.

The light source 110 is arranged below the diffuser plate 120, and emits light having a fixed light-emission angle (or radiation angle) toward the underside of the diffuser plate 120. The light source 110 is not particularly limited, but a light-emitting element such as a light-emitting diode or a laser diode can be used, for example. The number and arrangement of the light sources 110 are also not particularly limited, but the light source 110 is arranged such that a region including an opening 142 formed in the retroreflective plate 140 can be effectively irradiated on the underside of the retroreflective plate 140.

The diffuser plate 120 is, for example, a film, a sheet, or a plate optical member including a rectangular top surface and an underside facing the top surface. The diffuser plate 120 is configured to receive on the underside thereof, the light L emitted from the light source 110, diffuses the incident light, and emits the diffused light from a top-surface side of the diffuser plate 120. The light emitted from the diffuser plate 120 irradiates the region including the opening 142 of the retroreflective plate 140 substantially uniformly from the underside of the retroreflective plate 140.

The polarizing plate 130 is disposed on the top-surface side of the diffuser plate 120. The polarizing plate 130 is, for example, a rectangular optical member formed as a film, sheet, or plate, and is formed of, for example, a polarizing filter or a reflective polarizer, such as a dual brightness enhancement film (DBEF). The polarizing plate 130 receives the light emitted from the top-surface side of the diffuser plate 120 and emits polarized light (e.g., linearly-polarized light) from the incident light.

The retroreflective plate 140 is formed above the polarizing plate 130. The retroreflective plate 140 is a rectangular optical member formed as a film, sheet, or plate, and reflects light in the same direction as the incident light. The retroreflective plate 140 is formed of, for example, a prism-type retroreflective element such as a triangular-pyramid retroreflective element or a retroreflective element utilizing full-cube corner optics, or a bead-type retroreflective element.

A phase-adjusting film for adjusting a phase, such as a λ/4 film, may be provided on a surface of the retroreflective plate 140. The phase-adjusting film imparts a phase difference between the incident light and outgoing light. For example, the λ/4 film imparts a phase difference of λ/4 between the incident light and the outgoing light. When the λ/4 film is provided, the retroreflected light passes through the λ/4 film twice, and therefore has a phase difference of λ/4×2 with respect to the incident light.

Further, the retroreflective plate 140 is formed with one or more openings (through-holes) 142 for forming a design P that is an original image of an aerial image Q. The design P including the opening 142 is not particularly limited, but is, for example, an icon, a letter, a number, a symbol, or any figure such as a combination thereof as illustrated in FIG. 1A.

A polarized-beam splitter 150 is arranged above the retroreflective plate 140 with a space therebetween. A beam splitter is an optical element that splits incident light into transmitted light and reflected light. The polarized-beam splitter 150 is a polarized-light splitting element that splits incident light into a p-polarized component and an s-polarized component. The polarized-beam splitter 150 transmits light in a certain polarization state and reflects light in a certain polarization state. A polarizing direction of the polarized-beam splitter 150 is determined in relation to the polarizing direction of the polarizing plate 130. For example, the polarizing direction of the polarizing plate 130 is substantially orthogonal to the polarizing direction of the polarized-beam splitter 150.

A feature of the present embodiment is that the polarized-beam splitter 150 includes a curved or an arc-shaped surface. An external shape of the polarized-beam splitter 150 in a plan view is not particularly limited, but may be, for example, rectangular or circular. The polarized-beam splitter 150 is arranged such that a convex side of the curved surface faces upward, that is, a concave side of the curved surface faces the retroreflective plate 140. In the illustrated example, the polarized-beam splitter 150 is arranged such that an axis that passes through the center of curvature of the polarized-beam splitter 150 is aligned with an optical axis C that passes through substantially the center of the light source 110. A tangent line S that crosses the axis passing through the center of curvature of the polarized-beam splitter 150 is orthogonal to the optical axis C. A distance between the tangent line S of the polarized-beam splitter 150 and the principal surface of the retroreflective plate 140 is set such that the light retroreflected from the retroreflective plate 140 can enter the polarized-beam splitter 150.

As illustrated in FIG. 2B, the display device 100 configured in this way generates the aerial image Q of the design P above the polarized-beam splitter 150. That is, the light emitted from the light source 110 is diffused by the diffuser plate 120, is polarized by the polarizing plate 130, and then irradiates the underside of the retroreflective plate 140. The light irradiated on the underside of the retroreflective plate 140 passes through the opening 142 to generate light representing the design P. The light that passed through the retroreflective plate 140 is reflected by the polarized-beam splitter 150. The reflected light is reflected by the retroreflective plate 140 in the same direction as the incident light. The retroreflected light passes through the polarized-beam splitter 150 to form the aerial image Q of the design P.

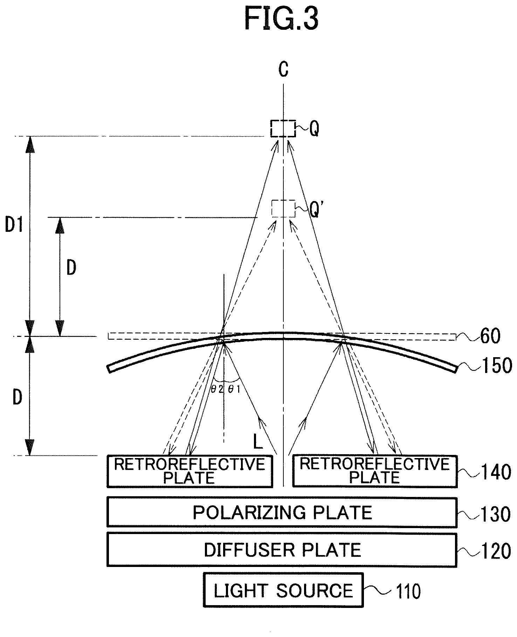

FIG. 3 is a diagram for comparing an aerial image Q' generated by the existing display device 10 as illustrated in FIG. 1B with the aerial image Q generated by the display device 100 of the present embodiment. In the existing display device 10, the polarized-beam splitter 60 (illustrated by a broken line) that is flat is arranged parallel to the principal surface of the retroreflective plate 140. In the display device 100 of the present embodiment, the polarized-beam splitter 150 having a curved surface is arranged so as to be substantially parallel to the principal surface of the retroreflective plate 140. In this way, a reflection angle of the polarized-beam splitter 150 with respect to an angle of incidence with respect to the optical axis C is changed.

In the existing display device 10, the light L from the light source 110 is reflected by the polarized-beam splitter 60 arranged orthogonal to the optical axis C. Then, the reflected light is reflected by the retroreflective plate 140 in a direction of incidence to form an aerial image Q'. In the existing display device 10, since the polarized-beam splitter 60 is flat, the angle of incidence with respect to the optical axis C is equal to the reflection angle. Accordingly, the aerial image Q' is formed at a position apart from the polarized-beam splitter 60 by a distance D, which is a distance on the other side of the polarized-beam splitter 60, between the retroreflective plate 140 including the design P and the polarized-beam splitter 60.

In contrast, in the display device 100 of the present embodiment, since the polarized-beam splitter 150 has a curved concave surface on the light source side, an incident angle θ1 with respect to the optical axis C of the light L emitted from the light source and a reflection angle θ2 with respect to the optical axis C have a relationship of θ2 < θ1. Therefore, a relationship between the distance D, which is the distance between the retroreflective plate 140 including the design P and the polarized-beam splitter 150, and a distance D1, which is a distance between the retroreflective plate 140 including the design P and a position the aerial-image is formed, can be expressed with a formula D1 = (sinθ1/sinθ2)D. While in the existing display device 10, in order to form an image of the aerial image Q at the distance D1, a thickness equal to the distance D1 is required on the light source side with respect to the retroreflective plate 140, in the display device 100 of the present embodiment, this can be achieved by having a thickness equal to the distance D on the light source side. Accordingly, the thickness of the display device 100 can be reduced while increasing the floating distance D1 of the aerial image Q.

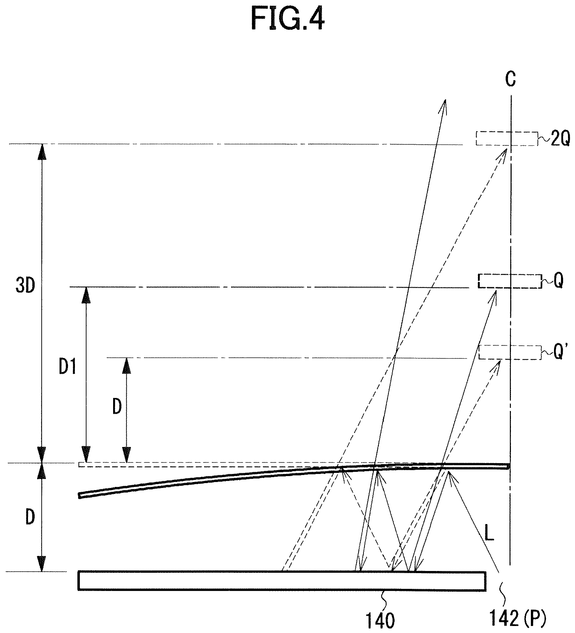

Next, reduction in the visibility of a higher-order aerial image due to multiple reflections in the display device of the present embodiment will be described. FIG. 4 is an enlarged view of one side of the optical axis C in FIG. 3, illustrating higher-order reflected light by the retroreflective plate 140. In the existing display device 10, the incident angle θ1 = the reflection angle θ2 with respect to the optical axis C, and similarly, as to the second-order reflected light, the incident angle θ2 = a reflection angle θ3 with respect to the optical axis C. As a result, the aerial image 2Q associated with the second-order reflected light is generated at a distance of 3D. Images are formed similarly after the third-order reflected light, and the aerial image is generated at a distance of (2n-1)D with respect to the "n"th-order reflected light.

In contrast, in the display device 100 of the present embodiment, the imaging distance of the "n"th-order aerial image is a distance of (2n-1)(sinθ1/sinθ2)D. When θ2 ≤ 0, the light does not form an image. That is, as compared with the existing display device 10, the imaging distance of the higher-order reflected light becomes farther than the distance D1 of the first-order image formation. Accordingly, it becomes difficult to visually recognize a higher-order aerial image.

Thus, according to the present embodiment, by using the curved polarized-beam splitter, it is possible to reduce the thickness of the display device while increasing the floating distance of the aerial image, and furthermore, to reduce the visibility of a higher-order aerial image generated by multiple reflections.

Although the above-described embodiment provides an example in which the aerial image Q is displayed by using polarized light, it is also possible to display the aerial image Q by using unpolarized light. In this case, the diffuser plate 120 and the polarizing plate 130 are not required, and the light from the light source 110 directly irradiates the back side of the retroreflective plate 140. Further, instead of the polarized-beam splitter 150, a half mirror having a curved surface is used.

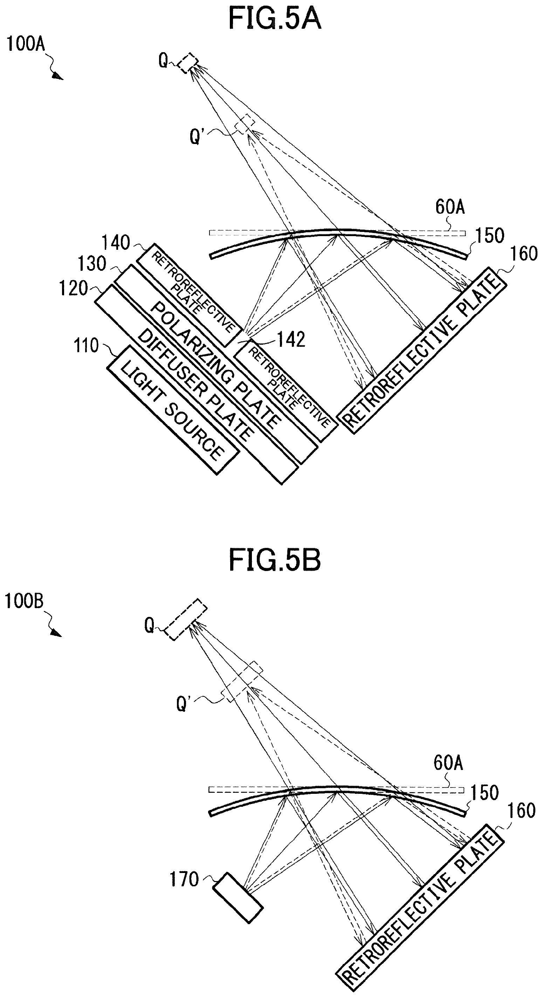

Next, a second embodiment of the present disclosure will be described. FIG. 5A is a schematic cross-sectional view illustrating a configuration of a display device according to the second embodiment. In a display device 100A of the second embodiment, the light source 110, the diffuser plate 120, the polarizing plate 130, and the optical axis C of the retroreflective plate 140 including the design P are arranged obliquely with respect to an axis passing through the center of curvature of the polarized-beam splitter 150. Another retroreflective plate, a retroreflective plate 160, is arranged obliquely with respect to the beam splitter 150 on the other side of the axis passing through the center of curvature of the polarized-beam splitter 150. The retroreflective plate 160 may be arranged at a position symmetrical to the retroreflective plate 140 with respect to the axis passing through the center of curvature of the polarized-beam splitter 150, but it is not limited thereto and may be arranged at an asymmetric position. In other words, the retroreflective plate 160 may be disposed at a position where the light reflected by the polarized-beam splitter 150 can be made incident thereon and the aerial image Q can be formed in a retroreflective direction. An external shape of the retroreflective plate 160 in a plan view, for example, is substantially the same as that of the retroreflective plate 140, but it is not limited thereto. The retroreflective plate 160, unlike the retroreflective plate 140, does not require an opening or a hole for generating the design P.

In the second embodiment, the light emitted from the opening 142 of the retroreflective plate 140 including the design P is reflected by the polarized-beam splitter 150. The reflected light is incident on the retroreflective plate 160 and is retroreflected in the same direction as the incident light. The retroreflected light is transmitted through the polarized-beam splitter 150 to form an aerial image Q. The aerial image Q is formed further away than the aerial image Q' generated when the polarized-beam splitter 60A having a flat shape is used.

As described above, according to the second embodiment, even when the light source is arranged obliquely with respect to the polarized-beam splitter 150, as in the first embodiment, the aerial image Q can be formed further away than when the polarized-beam splitter having a flat shape is used, and the display device 100A can be made thinner. At the same time, visibility of the higher-order aerial image generated by multiple reflections can be reduced.

FIG. 5B is a schematic cross-sectional view illustrating a configuration of a display device according to a third embodiment. In the display device 100A according to the second embodiment, the retroreflective plate 140 formed with the opening 142 is used to generate the design P. However, in a display device 100B according to the third embodiment, a display light source 170 such as a display device is used instead of the retroreflective plate 140.

The display light source 170 is not particularly limited as long as it has a function of emitting polarized light (a video image or an image). The display light source 170 may be a liquid crystal display (LCD), an organic EL display device, a projection display device, or the like, and emits the polarized light (video image), for example, in the direction (optical-axis direction) normal to the rectangular emission surface. The display light source 170 is, for example, a screen of a portable terminal such as a smartphone, a screen of a personal computer, a screen of a projector, and the like.

The display light source 170 is arranged such that its optical axis is oblique to the axis passing through the center of curvature of the polarized-beam splitter 150. The light emitted from the display light source 170 is reflected by the polarized-beam splitter 150 and then retroreflected by the retroreflective plate 160, and an aerial image Q is formed by the light transmitted through the polarized-beam splitter 150. Also, in the present embodiment, the aerial image Q is formed further away than the aerial image Q' in comparison with the case where the planar polarized-beam splitter 60A is used. Therefore, it is possible to reduce the thickness of the display device 100B and reduce the visibility of the higher-order aerial image.

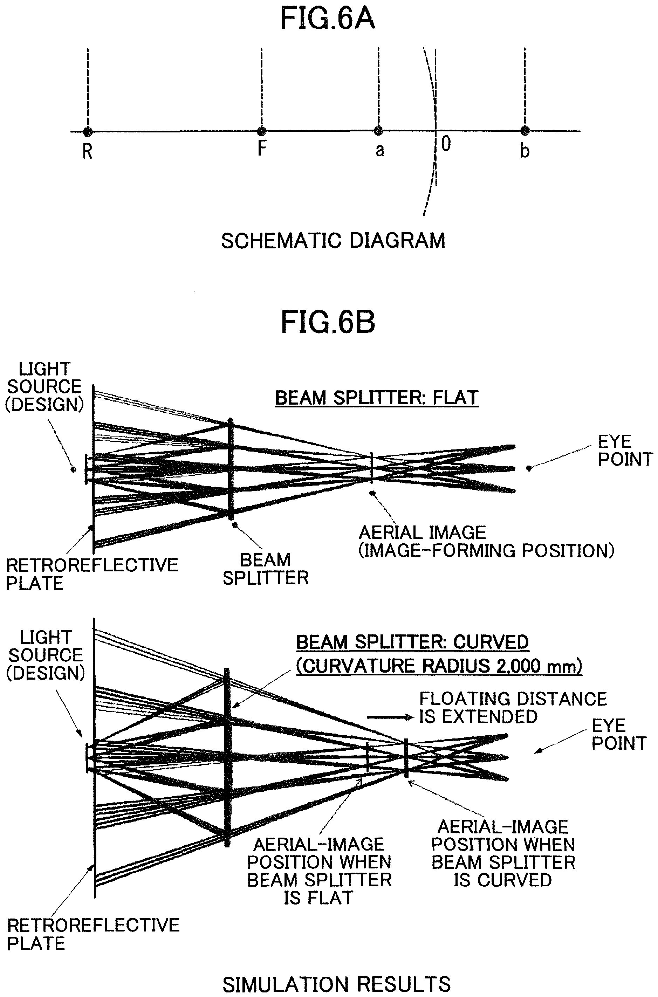

Next, specific effects of the present embodiment will be described. FIG. 6A is a schematic diagram illustrating a positional relationship of the optical members of the display device. FIG. 6B is simulation results illustrating the imaging positions of the aerial image. The upper diagram illustrates a case where a flat beam splitter is used in the optical system, and the lower diagram illustrates a case where a curved beam splitter is used in the optical system. Each letter indicated in FIG. 6A represents the following:
O: Reference point (top surface of the aerial-image display device)
R: Radius of the curvature of the beam splitter
F: Focal distance of the beam splitter (0.5R)
a: Distance from the light source (design) to the beam splitter ≈ device thickness
b: Imaging distance

According to the mapping formula, (1/a) - (1/b) = 1/F.

When the radius of curvature of the beam splitter is R = 2,000 mm and a = 50 mm, b = 52.6 mm and thus a < b. Accordingly, the floating distance is greater than the floating distance (b = 50 mm) when the beam splitter is flat. In other words, the height of the display device can be reduced relative to the floating distance of the aerial image. By back-calculation, when the floating distance is b = 50 mm and the radius of curvature of the beam splitter is R = 300 mm, a = 37.5 mm and the optical system can be made 25% thinner.

When the aerial images are set to be formed at the same floating distance and of the same size, the following accompanying effects occur.
(1) Miniaturization of the original design is required (the size of the aerial image is enlarged compared to the size of the design at the light source. Enlargement ratio = b/a).
(2) According to the effect (1) above, when the luminance of the design is the same, the luminance of the aerial image decreases along with an increase in the enlargement ratio.
(3) Accompanying the effect of (1) above, when the resolution (DPI) of the design is the same, the resolution of the aerial image decreases along with an increase in the enlargement ratio.
(4) Since the design is set closer to the beam splitter, an area of the required retroreflective plate can be reduced.

According to the present disclosure, by using the beam splitter having a curved surface, a floating height (floating distance) of the aerial image can be made higher than when a flat beam splitter is used, and thus the display device can be made thinner. Furthermore, the visibility of a higher-order aerial image due to multiple reflections can be reduced.

Although the preferred embodiments of the present invention have been described in detail above, the present invention is not limited to any particular embodiment, and various modifications and changes are possible within the scope of the claims.

## Claims

1. A display device capable of displaying an aerial image by using retroreflection, the display device comprising:
a generator configured to generate light representing a design of the aerial image as an original image;
a retroreflective member configured to retroreflect the light representing the design; and
a beam splitter including a curved surface, wherein
the beam splitter is disposed such that a concave side thereof faces the retroreflective member.

2. The display device according to claim 1, wherein
the retroreflective member includes an opening for generating the design,
the generator includes a light source for illuminating the retroreflective member, and
the light source illuminates the retroreflective member to generate light representing the design.

3. The display device according to claim 2, wherein
the generator further includes a diffuser plate and a polarizing plate between the light source and the retroreflective member,
the light representing the design is polarized light, and
the beam splitter is a polarized-beam splitter.

4. The display device according to one of claims 1 to 3, wherein
the beam splitter is disposed such that an incident angle > a reflection angle upon the light representing the design being made incident thereon.

5. The display device according to one of claims 1 to 4, wherein
the retroreflective member is disposed such that a principal surface thereof is orthogonal to an axis passing through a center of curvature of the beam splitter.

6. The display device according to one of claims 1 to 5, wherein
the retroreflective member has a principal surface thereof disposed obliquely with respect to an axis passing through a center of curvature of the beam splitter.

7. The display device according to one of claims 1 to 6, wherein
the generator includes a display light source for emitting a video image as the design.

8. The display device according to claim 7, wherein
an optical axis of the display light source is disposed obliquely with respect to an axis passing through a center of curvature of the beam splitter.
